Europäisches Patentamt

(19) European Patent Office

Office européen des brevets

(11) Publication number: **0 237 299**
**B1**

# EUROPEAN PATENT SPECIFICATION

(45) Date of publication of the patent specification:
23.05.90

(51) Int. Cl.⁵: **B65G 47/31, B65B 35/24**

(21) Application number: 87301974.9

(22) Date of filing: 06.03.87

(54) Feed apparatus.

(30) Priority: 12.03.86  GB 8606023

(43) Date of publication of application:
16.09.87 Bulletin 87/38

(45) Publication of the grant of the patent:
23.05.90 Bulletin 90/21

(84) Designated Contracting States:
CH DE GB IT LI NL

(56) References cited:
EP-A- 0 083 913
EP-A- 0 127 459
WO-A-85/04152
GB-A- 2 059 375

(73) Proprietor: CAMBRIDGE CONSULTANTS (SYSTEMS
ENGINEERING) LIMITED, Cambridge Science Park
Milton Road, Cambridge CB4 4DW(GB)

(72) Inventor: Greeves, Thomas William, 8 Middle Park Close,
Selly Oak Birmingham(GB)

(74) Representative: Thompson, George Michael et al,
MARKS & CLERK Alpha Tower Suffolk Street
Queensway, Birmingham B1 1TT(GB)

## Description

This invention relates to an apparatus for feeding articles to a processing machine and comprising a belt conveyor which transfers articles into the working zone of the processing machine, a feed conveyor on which articles are delivered, a transfer belt which transfers articles from the feed conveyor to the belt conveyor variable speed drive means for the transfer belt and a control means which in response to signals from sensing means controls the operation of the transfer belt so that articles are positioned on the belt conveyor at the desired position.

In the confectionery industry elongated articles such as chocolate bars are wrapped in a wrapping machine using a wrapper which is formed as a continuous strip and is supplied in roll form with the product identification printed at predetermined intervals along the length of the strip. In the wrapping machine the strip is guided about the article, sealed along the length of the article and then crimped across the ends during which process the strip is severed so as to produce a separate wrapped article. It is necessary to ensure that the article is positioned correctly relative to the strip so that the product identification appears in the correct position relative to the article and that the crimping devices operate at the correct position. For this to take place the articles must be spaced from each other by a predetermined distance which allows for the sealed ends of the packaged article. A conveyor is provided to transport the articles through the wrapping machine and in order to provide the positive location required, it is known to provide locating devices on the conveyor which must however be moved out of position prior to sealing the strip. Another problem with this method of location is that the articles have to be positioned on the conveyor and such a system is only suitable for low rates of feed.

It has also been proposed to convey the articles through the wrapping machine on a belt conveyor and to use a transfer belt which receives the articles from a feed conveyor on which the articles are positioned in generally end to end relationship and transfers them to the belt conveyor. Because of the spacing required between the articles on the belt conveyor, the latter runs at a higher speed than the feed conveyor and the transfer belt which runs at a constant speed receives the articles from the feed conveyor and accelerates them to the speed of the belt conveyor before feeding them onto the belt conveyor. This will ensure that the articles on the belt conveyor are spaced but since the articles will slip on the transfer belt the spacing will not be precise. However, acceptable wrapping standards have been achieved using this method. If the rate of feed of articles is increased the wrapping standard declines and the object of the present invention is to provide an apparatus for the purpose specified in a simple and convenient form.

EP-A 0 083 913 discloses an apparatus in which the articles are transferred from a feed conveyor to a belt conveyor using a transfer belt. The transfer belt is driven by a variable speed motor and operates at a higher speed than the feed conveyor and while an article is on the transfer belt its position is sensed and the speed of the transfer belt is adjusted so that the article is deposited on the belt conveyor at the desired position. The precharacterising portion of the appended claim 1 is based on the disclosure in EP-A 0 093 913.

EP-A 0 127 459 discloses a packaging apparatus which has a feed conveyor, and a transfer belt which conveys articles on the feed conveyor to a belt conveyor. The transfer belt operates at the speed of the feed conveyor or at the speed of the belt conveyor and both the feed conveyor and the transfer belt operate in an intermittent manner during the transfer of articles.

According to the invention a clamping means is provided to clamp the article onto the transfer belt and the sensing means comprise a first means which provides a signal to the control means indicative of the position of the belt conveyor and second means which provides a signal to the control means indicative of the deposit of an article onto the transfer belt, the control means acting to control the speed of the transfer belt so that the transfer belt is driven at the speed of the feed conveyor when an article is transferred from the feed conveyor to the transfer belt and is driven at the speed of the belt conveyor when an article is transferred from the transfer belt to the belt conveyor.

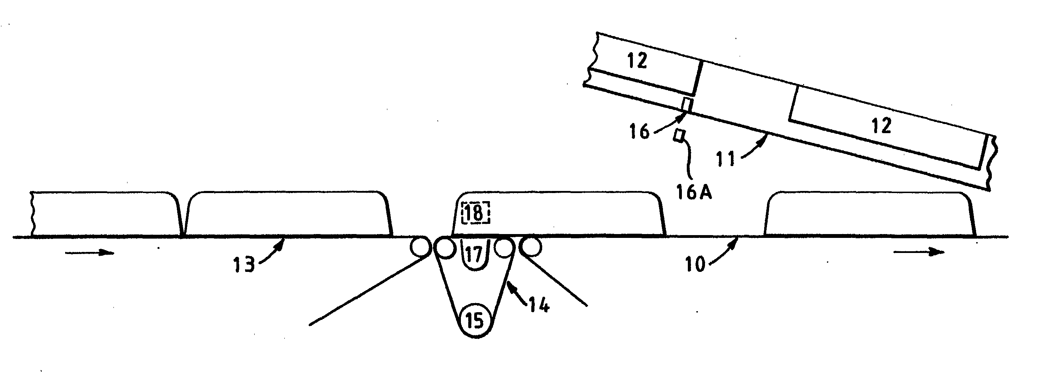

An example of an apparatus in accordance with the invention will now be described with reference to the accompanying drawing which shows a part of the apparatus in diagrammatic form.

The apparatus is for feeding elongated confectionery articles to a processing or wrapping machine on a belt conveyor indicated at 10. Wrapping paper is delivered in strip form, a portion of which is seen at 11, to the wrapping zone in which the paper is guided about the article and sealed using seam rolls, along its length and is then sealed adjacent the opposite ends of the article by a cross seal crimp and cutter which severs the strip to produce a wrapped article. The wrapping paper is provided with product identification markings 12 at spaced intervals the interval taking into account the length of the article together with the length of paper required to provide the sealed ends of the wrapping. The speed of the belt conveyor and that of the wrapping paper are substantially equal and are synchronized.

Articles are delivered from a production machine onto a feed conveyor l3 which again is of the endless belt type. The articles during their passage from the production machine are moved into close end to end relationship on the conveyor l3.

It will be obvious that the linear speeds of the belt conveyor l0 and the conveyor l3 must be different and for a nominal length of article and a predetermined spacing between the articles on the belt conveyor l0, the speed of the latter will be a predetermined ratio higher than that of the conveyor l3.

The adjacent ends of the belt conveyor and feed conveyor are spaced from each other and the gap is occupied by a transfer belt l4. The transfer belt is driven by a variable speed electric drive motor l5

which has the ability to accelerate the transfer belt from a low speed corresponding substantially to the speed of the conveyor l3 to a high speed corresponding to that of the belt conveyor l0 and to decelerate back down to the low speed. The drive motor is controlled by a control means which is micro processor based and which can control the speed and acceleration or deceleration of the motor in response to various input signals.

Acceleration of the transfer belt l4 is arranged to take place when an article is on the belt and the instant of acceleration and/or the rate of acceleration is very carefully determined so as to ensure that the article is delivered to the belt conveyor l0 at a precise location. Since articles may be of slightly different lengths it is the leading edge of the article which is precisely positioned. In practice the so-called precise location is determined by sensing identification marks l6 on the strip of wrapping paper using a sensor l6A. In this manner the leading edge of the article will be precisely located relative to the wrapping paper. In order to ensure that the article is located with the required degree of precision it is necessary to ensure that the article does not slip on the transfer belt while acceleration is taking place. This is achieved by means of a suction unit l7 positioned below the upper run of the transfer belt. Following the delivery of an article to the belt conveyor l0 the transfer belt is decelerated to the low speed ready to receive the next article. The transfer belt may be a perforated belt but it is preferred that the belt be formed as two narrow belts with a space therebetween.

The arrival of an article on the transfer belt is detected by means of a photo electric sensor l8 positioned downstream of the upstream end of the transfer belt by a distance sufficient to allow the suction unit to draw the article into firm engagement with the transfer belt. At this point the drive means l5 can accelerate the transfer belt and the article thereon to the speed of the belt conveyor l0. However, immediate acceleration might cause the transfer belt to deposit the article on the belt conveyor early or in advance of the desired location. It is therefore possible to delay the start of acceleration which in this case is a constant acceleration, so as to ensure that the article is delivered at the precise location. The delay is of course limited and in a typical case assuming an article length of l00 mm, l0 mm of the article length is required to allow the suction unit l7 to operate, a further l0 mm of the article length is lost when the suction unit is ineffective as the article moves onto the belt conveyor, 45 mm of the article length is required for the acceleration leaving 35 mm of the article length available for adjustment. Once the article has been deposited on the belt conveyor this being checked by the passage of the end of the article past the sensor l8, there is sufficient time available for the transfer belt to decelerate back to the speed of the feed conveyor. With articles of the aforesaid length a rate of feed of at least 800 articles per minute is possible. It will be appreciated that the rate of acceleration will vary depending on the speed of the belt conveyor l0.

The aforesaid adjustment can be used to cope with the normal production tolerance in the length of the article but it cannot cope with extra long articles or extra short articles or the lack of an article such as might occur due to a fault in the production machine. In this case it is arranged that the cross seal crimps are not operated and the faulty unit enclosed in a wrapping, is rejected downstream of the crimps.

It is preferable however to provide an inspection stage upstream of the feed conveyor to ensure that no article which is outside the production tolerances is allowed to reach the feed conveyor l3. For this purpose a queue conveyor not shown may be provided upstream of the feed conveyor and from which the faulty articles are removed. This may result in gaps between adjacent articles on the feed conveyor l3 with which gaps the action of the transfer belt cannot, at the high feed rates involved, cope. It is therefore proposed to sense the gaps and either increase the speed of the feed conveyor as the article preceding the gap arrives at the transfer belt l4 or if the gap is too large, to slow the feed belt so that the gap is approximately the length of an article. In the former case the transfer belt operates as described and in the latter case a piece of wrapping will be produced which is rejected downstream of the cross seal crimps. The speed of the feed conveyor at the instant of article transfer to the transfer belt is the same as that of transfer belt.

The wrapping paper or film is supplied in rolls and to ensure continuity of production a festoon or store of unwound paper or film is provided between the roll from which the paper or film is being drawn and the wrapping machine. This is to allow time for the splicing of the end of one roll to the start of the new roll. Care is taken to try to ensure that the spacing of the identification markings l2 is maintained across the splice. However, it is possible for an error to occur which could result in adjacent markings on opposite sides of the splice being spaced by more or less than the required distance. The spacing of the markings is sensed and in the event that the spacing is more than it should be, one article will be wrapped in a wrapping of increased lengths and it will be necessary to resynchronise the wrapping and the conveyor l0. In the event that the spacing is less than the length of an article then action must be taken, this action being to decelerate the conveyor l3 so that the article is again wrapped in a wrapping of increased length followed by resynchronization of the wrapping and the conveyor l0.

The apparatus as described besides providing precise positioning of articles at high rates of feed has a further advantage over known forms of apparatus in that the overall feed rate of the apparatus can be varied more quickly. When using the known forms of apparatus it is necessary to ensure an adequate and regular supply of articles since the rate of feed of the known forms of apparatus cannot be adjusted quickly in accordance with the supply of articles. With the apparatus as described it is possible to adjust the rate of feed more quickly so that the supply of articles to be wrapped is less critical.

It will be understood that some articles may be wrapped in a wrapping paper which does not have the spaced article identification markings l2. For ex-

ample, the wrapping paper may have a continuous general pattern so that so far as the wrapped article is concerned there is no need for precise location of the article and the wrapping paper. However, it is still necessary to provide precise location of the article on the belt conveyor l0 because the operation of the cross seal crimping devices is determined by the movement of the belt. In this case an indication of the position of the belt can be provided by a sensor such as an encoder. It will also be understood that the apparatus as described may be applied to other forms of processing machine.

The general concept of the apparatus as described can be used to take articles from the feed conveyor l3 and to deposit them at precise positions on the belt conveyor l0 even when the two conveyors are running at substantially the same speed. In this case the articles must be spaced on the feed conveyor by a distance which is approximately equal to the require spacing on the belt conveyor taking into account any speed difference between the two conveyors. The transfer belt must undergo acceleration and deceleration at different rates or vice versa while the article is on the transfer belt to allow the article to be placed on the belt conveyor at the desired position.

## Claims

1. An apparatus for feeding articles to a processing machine comprising a belt conveyor (10) for feeding the articles into the working zone of the processing machine, a feed conveyor (13) on which the articles are delivered, a transfer belt (14) interposed between the conveyors (10, 13) for transferring articles between the two conveyors, a variable speed drive means (15) for driving the transfer belt (14) a control means for controlling the speed of said drive means (15), so that an article is deposited onto the belt conveyor (10) at the desired position, characterised by first means (16A) for providing a signal to said control means indicative of the position of said belt conveyor (10), clamping means (17) for clamping an article to the transfer belt (14), and second means (18) for providing a signal to said control means indicative of the deposit of an article onto the transfer belt (14) from said feed conveyor (13), said control means acting to control the speed of the transfer belt (14) so that the transfer belt (14) is driven at the speed of the feed conveyor (13) when an article is transferred from the feed conveyor (13) to the transfer belt (14), and is driven at the speed of the belt conveyor (10) when an article is transferred from the transfer belt (14) to the belt conveyor (10).

2. An apparatus according to claim 1 characterised in that said clamping means comprises a suction unit (17) disposed below the transfer belt (14).

3. An apparatus according to claim 1 characterised in that said second means comprises a sensor (18) positioned downstream of the upstream end of the transfer belt (14).

4. An apparatus according to claim 1 characterised in that said first means comprises a sensor (16A) responsive to spaced markings (16) on a strip of material (11) which is fed to the processing machine in synchronism with the belt conveyor (10).

## Patentansprüche

1. Vorrichtung zur Zufuhr von Gegenständen zu einer Verarbeitungseinrichtung, mit einem Bandförderer (10) zur Zufuhr der Gegenstände in den Arbeitsbereich der Verarbeitungseinrichtung, einen Zufuhrförderer (13), auf den die Gegenstände abgegeben werden, ein Überführungsband (14), das zwischen den Förderern (10, 13) zwischengeschaltet ist, um Gegenstände zwischen den beiden Förderern zu überführen, einem regelbaren Antrieb (15) zum Antrieb des Überführungsbands (14), und einer Steuervorrichtung zur Steuerung der Drehzahl des Antriebs (15), so daß ein Gegenstand in der gewünschten Stellung an den Bandförderer (10) aufgebracht wird, gekennzeichnet durch eine erste Einrichtung (16A), die an die Steuervorrichtung ein Signal liefert, das die Position des Bandförderers angibt, eine Befestigungseinrichtung (17), um einen Gegenstand am Überführungsband (14) zu befestigen, und eine zweite Einrichtung (18), um der Steuervorrichtung ein Signal zu liefern, das die Abgabe des Gegenstands vom Zufuhrförderer (13) auf das Überführungsband (14) anzeigt, und die Steuervorrichtung wirksam ist, um die Drehzahl des Überführungsbands (14) derart zu steuern, daß das Überführungsband (14) mit der Drehzahl des Zufuhrförderers (13) angetrieben wird, wenn ein Gegenstand vom Zufuhrförderer (13) auf das Überführungsband (14) überführt wird, und daß das Überführungsband mit der Drehzahl des Bandförderers (10) angetrieben wird, wenn ein Gegenstand vom Überführungsband (14) auf den Bandförderer (10) übertragen wird.

2. Vorrichtung nach Anspruch 1, dadurch gekennzeichnet, daß die Befestigungseinrichtung eine Saugeinheit (17) umfaßt, die unterhalb des Überführungsbands (14) angeordnet ist.

3. Vorrichtung nach Anspruch 1, dadurch gekennzeichnet, daß die zweite Einrichtung einen Sensor (18) umfaßt, der dem stromaufwärtigen Ende des Überführungsbands (14) nachgeschaltet ist.

4. Vorrichtung nach Anspruch 1, dadurch gekennzeichnet, daß die erste Einrichtung einen Sensor (16A) umfaßt, der auf im Abstand liegende Markierungen (16) auf einem Materialstreifen (11) anspricht, der der Verarbeitungseinrichtung synchron mit dem Bandförderer (10) zugeführt wird.

## Revendications

1. Appareil pour l'amenée d'articles à une machine de traitement, comprenant un convoyeur à bande (10) pour amener les articles dans la zone de travail de la machine de traitement, un convoyeur d'alimentation (13) sur lequel sont délivrés les articles une bande de transfert (14) interposée entre les convoyeurs (10, 13) pour transférer les articles d'un convoyeur à l'autre, un moyen d'entraînement à vitesse variable (15) pour entraîner la bande de transfert (14), un moyen de commande pour commander la vitesse du moyen d'entraînement (15), de sorte

qu'un article est déposé sur le convoyeur à bande (10) à la position souhaitée, caractérisé par un premier moyen (16A) pour fournir au moyen de commande un signal indicateur de la position du convoyeur à bande (10), un moyen de fixation (17) pour fixer un article sur la bande de transfert (14), et un deuxième moyen (18) pour fournir au moyen de commande un signal indicateur de la dépose d'un article sur la bande de transfert (14) par le convoyeur d'alimentation (13), le moyen de commande agissant pour commander la vitesse de la bande de transfert (14) de telle sorte que la bande de transfert (14) est entraînée à la vitesse du convoyeur d'alimentation (13) lorsqu'un article est transféré du convoyeur d'alimentation (13) sur la bande de transfert (14), et est entraînée à la vitesse du convoyeur à bande (10) lorsqu'un article est transféré de la bande de transfert (14) sur le convoyeur à bande (10).

2. Appareil selon la revendication 1, caractérisé en ce que le moyen de fixation consiste en une unité d'aspiration (17) disposée en dessous de la bande de transfert (14).

3. Appareil selon la revendication 1, caractérisé en ce que le deuxième moyen consiste en un capteur (18) positionné en aval de l'extrémité amont de la bande de transfert (14).

4. Appareil selon la revendication 1, caractérisé en ce que le premier moyen consiste en un capteur (16A) réagissant à des marquages espacés (16) sur une bande de matériau (11) qui est amenée dans la machine de traitement en synchronisme avec le convoyeur à bande (10).

EP 0 237 299 B1